(19) Europäisches Patentamt
European Patent Office
Office européen des brevets

(11) EP 4 560 621 A1

(12) EUROPEAN PATENT APPLICATION

(43) Date of publication:
28.05.2025 Bulletin 2025/22

(51) International Patent Classification (IPC):
G10K 15/02 (2006.01)

(21) Application number: 24207423.5

(52) Cooperative Patent Classification (CPC):
G10K 15/02

(22) Date of filing: 18.10.2024

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 22.11.2023 JP 2023198413

(71) Applicant: TOYOTA JIDOSHA KABUSHIKI
KAISHA
Aichi-ken, 471-8571 (JP)

(72) Inventors:
• HARA, Yoshikazu
TOYOTA-SHI, AICHI-KEN, 471-8571 (JP)
• YAMANAKA, Tomio
TOYOTA-SHI, AICHI-KEN, 471-8571 (JP)
• HIRAIWA, Hiroshi
TOYOTA-SHI, AICHI-KEN, 471-8571 (JP)
• FUKUHARA, Chie
TOYOTA-SHI, AICHI-KEN, 471-8571 (JP)

(74) Representative: Cabinet Beau de Loménie
158, rue de l'Université
75340 Paris Cedex 07 (FR)

(54) VEHICLE MANAGEMENT SYSTEM AND BATTERY ELECTRIC VEHICLE

(57) A vehicle management system (100) includes one or more processors (101) configured to generate a pseudo engine sound based on a driving state of a battery electric vehicle (10). The one or more processors (101) are configured to output the pseudo engine sound from a speaker (70) mounted on the battery electric vehicle (10). The one or more processors (101) are configured to generate the pseudo engine sound using a sound source corresponding to a selected vehicle type selected from among a plurality of engine vehicle types. The one or more processors (101) are configured to, when a user makes a tentative designation input to tentatively designate the selected vehicle type while the battery electric vehicle (10) is stationary, output a sample sound for an engine vehicle type corresponding to the tentative designation input in a predetermined output form from the speaker (70).

FIG. 4

EP 4 560 621 A1

**Description**

BACKGROUND OF THE INVENTION

1. Field of the Invention

The present disclosure relates to a battery electric vehicle that includes an electric motor as a drive source, and to a vehicle management system to be applied to the battery electric vehicle.

2. Description of Related Art

There has conventionally been devised a battery electric vehicle that generates a pseudo engine sound generated when a virtual engine vehicle that includes an internal combustion engine as a drive source travels. Japanese Unexamined Patent Application Publication No. 2011-215437, for example, discloses a sound control device that controls a pseudo engine sound (virtual engine sound) for the purpose of realistically expressing an engine sound generated when gear shifting is performed in an engine vehicle.

SUMMARY OF THE INVENTION

Actual engine vehicles generate engine sounds with different characteristics, depending on the vehicle types. In a battery electric vehicle that generates a pseudo engine sound, the vehicle type (engine vehicle type) of a virtual engine vehicle can be designated from among a plurality of types to make it possible to generate pseudo engine sounds that simulate engine sounds of various engine vehicle types. A user can designate an appropriate engine vehicle type according to his/her taste or mood.

On the other hand, it is conceivable that the user determines whether a pseudo engine sound matches his/her taste or mood after actually listening to the pseudo engine sound during travel. In this case, it has conventionally been necessary for the user to designate an engine vehicle type after actually driving the vehicle and listening to the pseudo engine sound. This gives the user an impression that it is troublesome to designate an engine vehicle type. The present disclosure provides a vehicle management system and a battery electric vehicle that reduce such trouble for users.

A first aspect of the present disclosure provides a vehicle management system to be applied to a battery electric vehicle that includes an electric motor as a drive source. The vehicle management system includes one or more processors. The one or more processors are configured to generate a pseudo engine sound based on a driving state of the battery electric vehicle. The one or more processors are configured to output the pseudo engine sound from a speaker mounted on the battery electric vehicle. The one or more processors are configured to generate the pseudo engine sound using a sound source corresponding to a selected vehicle type selected from among a plurality of engine vehicle types. The one or more processors are configured to, when a user makes a tentative designation input to tentatively designate the selected vehicle type while the battery electric vehicle is stationary, output a sample sound for an engine vehicle type corresponding to the tentative designation input in a predetermined output form from the speaker.

In the vehicle management system according to the first aspect of the present disclosure, the sample sound may be an engine revving sound in a predetermined engine rotational speed range.

In the vehicle management system according to the first aspect of the present disclosure, the driving state of the battery electric vehicle may include an operation state of a manual driving element of the battery electric vehicle. The one or more processors may be configured to stop outputting the sample sound when the manual driving element is operated while the sample sound is being output from the speaker.

In the vehicle management system according to the first aspect of the present disclosure, the manual driving element may include an accelerator pedal.

In the vehicle management system according to the first aspect of the present disclosure, the one or more processors may be configured to accept a change input to change a tone of the sample sound from the user while the sample sound is being output from the speaker. The one or more processors may be configured to adjust the tone of the sample sound according to the change input when the change input is made. The one or more processors may be configured to output the pseudo engine sound so as to reflect an adjustment of the sample sound when the engine vehicle type corresponding to the tentative designation input is determined as the selected vehicle type.

In the vehicle management system according to the first aspect of the present disclosure, the one or more processors may be configured to switch a state of an engine sound stop mode in which an output of the pseudo engine sound from the speaker is stopped. The one or more processors may be configured to output a pseudo engine start sound of the selected vehicle type from the speaker when the engine sound stop mode is turned from on to off.

In the vehicle management system according to the first aspect of the present disclosure, the user may include a plurality of users. The battery electric vehicle may include one or more storage devices configured to store a database that manages user identification information and a designated engine vehicle type in association with each other for each of the users, and a driver recognition sensor configured to recognize a driver of the battery electric vehicle. The designated engine vehicle type may be a vehicle type designated by a designation input to designate the selected vehicle type. The one or more processors may be configured to acquire the user identification information on the driver using the driver recognition sensor when the battery electric vehicle is started. The one or more processors may be configured to read the designated engine vehicle type associated with the user identification information on the driver from the database. The one or more processors may be configured to determine the read designated engine vehicle type as the selected vehicle type.

In the vehicle management system according to the first aspect of the present disclosure, the battery electric vehicle may include a manual mode in which driving characteristics of a manual transmission vehicle are simulated.

In the vehicle management system according to the first aspect of the present disclosure, the battery electric vehicle may include an accelerator pedal and a sequential shifter. The battery electric vehicle may be configured to vary output characteristics of the electric motor for an operation of the accelerator pedal according to a shift operation of the sequential shifter in the manual mode.

In the vehicle management system according to the first aspect of the present disclosure, the battery electric vehicle may include an accelerator pedal, a pseudo clutch pedal, and a pseudo shift device. The pseudo clutch pedal may be operated when operating the pseudo shift device. The battery electric vehicle may be configured to vary an output of the electric motor for an operation of the accelerator pedal according to an operation of the pseudo clutch pedal and an operation of the pseudo shift device in the manual mode.

A second aspect of the present disclosure provides a battery electric vehicle including: an electric motor that is used as a drive source; and one or more processors. The one or more processors are configured to generate a pseudo engine sound based on a driving state of the battery electric vehicle. The one or more processors may be configured to: output the pseudo engine sound from a speaker mounted on the battery electric vehicle; and generate the pseudo engine sound using a sound source corresponding to a selected vehicle type selected from among a plurality of engine vehicle types. The one or more processors are configured to, when a user makes a tentative designation input to tentatively designate the selected vehicle type while the battery electric vehicle is stationary, output a sample sound for an engine vehicle type corresponding to the tentative designation input in a predetermined output form from the speaker.

In the battery electric vehicle according to the second aspect of the present disclosure, the one or more processors may be configured to accept a change input to change a tone of the sample sound from the user while the sample sound is being output from the speaker. The one or more processors may be configured to adjust the tone of the sample sound according to the change input when the change input is made. The one or more processors may be configured to output the pseudo engine sound so as to reflect an adjustment of the sample sound when the engine vehicle type corresponding to the tentative designation input is determined as the selected vehicle type.

In the battery electric vehicle according to the second aspect of the present disclosure, the one or more processors may be configured to switch a state of an engine sound stop mode in which an output of the pseudo engine sound from the speaker is stopped. The one or more processors may be configured to output a pseudo engine start sound of the selected vehicle type from the speaker when the engine sound stop mode is turned from on to off.

In the battery electric vehicle according to the second aspect of the present disclosure, the user may include a plurality of users. The battery electric vehicle may further include one or more storage devices configured to store a database that manages user identification information and a designated engine vehicle type in association with each other for each of the users, and a driver recognition sensor configured to recognize a driver of the battery electric vehicle. The designated engine vehicle type may be a vehicle type designated by a designation input to designate the selected vehicle type. The one or more processors may be configured to acquire the user identification information on the driver using the driver recognition sensor when the battery electric vehicle is started. The one or more processors may be configured to read the designated engine vehicle type associated with the user identification information on the driver from the database. The one or more processors may be configured to determine the read designated engine vehicle type as the selected vehicle type.

According to the present disclosure, when a user makes a tentative designation input while the battery electric vehicle is stationary, a sample sound for an engine vehicle type corresponding to the tentative designation input is output from the speaker. This allows the user as the driver to listen to a sample sound for each engine vehicle type before designating an engine vehicle type. By listening to the sample sound, the user can determine whether the pseudo engine sound matches his/her taste or mood, even without actually driving the battery electric vehicle. Then, the user can designate an engine vehicle type when the pseudo engine sound matches his/her taste or mood. In this manner, it is possible to reduce the trouble given to the user.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a conceptual diagram illustrating a battery electric vehicle and a vehicle management system according to an embodiment;

FIG. 2 is a block diagram illustrating an example of the basic functional configuration of the vehicle management system;

FIG. 3 is a block diagram illustrating an example of the functional configuration of the vehicle management system associated with a function to output a sample sound;

FIG. 4 is a flowchart illustrating an example of a process flow of a process executed by the vehicle management system related to the function to output a sample sound;

FIG. 5 is a block diagram illustrating an example of the functional configuration of the vehicle management system associated with a function to adjust the tone of a pseudo engine sound using the sample sound;

FIG. 6 is a block diagram illustrating an example of the functional configuration of the vehicle management system associated with a function to output a pseudo engine start sound;

FIG. 7 is a block diagram illustrating an example of the functional configuration of a vehicle type selection unit at the start of the battery electric vehicle;

FIG. 8 is a block diagram illustrating a first example of the configuration of a power control system of the battery electric vehicle;

FIG. 9 illustrates respective examples of an engine model, a clutch model, and a transmission model that constitute a manual transmission (MT) vehicle model;

FIG. 10 illustrates the torque characteristics of an electric motor achieved through motor control performed using the MT vehicle model, as compared with the torque characteristics of an electric motor achieved through normal motor control for a battery electric vehicle; and

FIG. 11 is a block diagram illustrating a second example of the configuration of the power control system of the battery electric vehicle.

DETAILED DESCRIPTION OF EMBODIMENTS

An embodiment of the present disclosure will be described with reference to the accompanying drawings.

1. Battery Electric Vehicle and Vehicle Management System

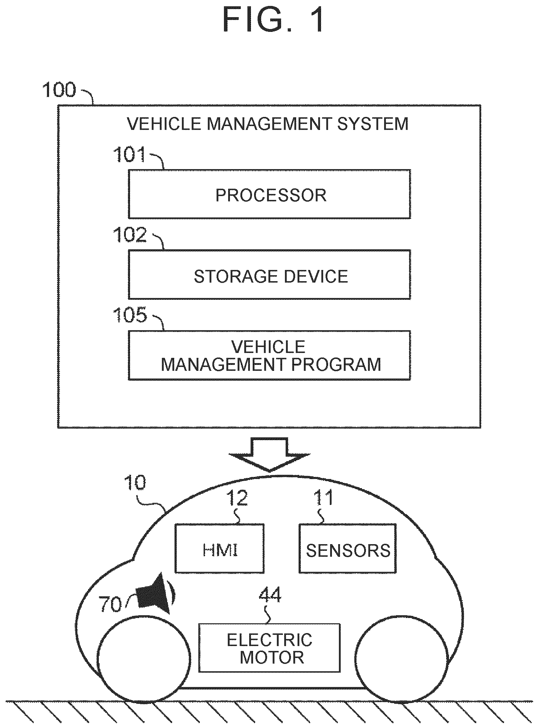

FIG. 1 is a conceptual diagram illustrating a battery electric vehicle 10 and a vehicle management system 100 according to the present embodiment. The battery electric vehicle 10 includes an electric motor 44 as a drive source. The electric motor 44 may be a brushless direct-current (DC) motor or a three-phase alternating-current (AC) synchronous motor, for example. The battery electric vehicle 10 uses the electric motor 44 as a power unit for travel.

The battery electric vehicle 10 also includes various sensors 11. The various sensors 11 detect the driving state of the battery electric vehicle 10. Examples of the various sensors 11 include an accelerator position sensor, a brake position sensor, a steering angle sensor, a steering torque sensor, a wheel speed sensor, an acceleration sensor, a rotational speed sensor, a position sensor, a surrounding environment recognition sensor, and a driver recognition sensor. The accelerator position sensor detects the operation amount of an accelerator pedal. The brake position sensor detects the operation amount of a brake pedal. The steering angle sensor detects the steering angle of a steering wheel. The steering torque sensor detects steering torque of the steering wheel. The wheel speed sensor detects the rotational speed of a wheel of the battery electric vehicle 10. The acceleration sensor detects the lateral acceleration and the front-rear acceleration of the battery electric vehicle 10. The rotational speed sensor detects the rotational speed of the electric motor 44. The position sensor detects the position of the battery electric vehicle 10. Examples of the position sensor include a Global Navigation Satellite System (GNSS) sensor. The surrounding environment recognition sensor is a sensor that recognizes (detects) the surrounding environment of the battery electric vehicle 10. Examples of the surrounding environment recognition sensor include a camera, a LIDAR (Light Detection And Ranging), and a radar. The driver recognition sensor is a sensor that recognizes (detects) a driver of the battery electric vehicle 10.

In addition, the battery electric vehicle 10 is equipped with one or more speakers 70. The speaker 70 may be an in-vehicle speaker that outputs a sound to the vehicle cabin of the battery electric vehicle 10, for example. In another example, the speaker 70 may be an exterior speaker that outputs a sound to the outside of the battery electric vehicle 10. The battery electric vehicle 10 may include both an in-vehicle speaker and an exterior speaker.

The battery electric vehicle 10 also includes a human-machine interface (HMI) 12 as an interface with a user. The HMI 12 presents various kinds of information to the user through display or sound, and accepts various inputs from the user. The HMI 12 is composed of a multi-information display, a meter display, a steering switch, a speaker phone, a touch panel, etc.

The vehicle management system 100 is applied to such a battery electric vehicle 10, and manages the battery electric vehicle 10. The entire vehicle management system 100 may be mounted on the battery electric vehicle 10. In another example, at least a part of the vehicle management system 100 may be included in a management server that is external to the battery electric vehicle 10. In that case, the vehicle management system 100 may remotely manage the battery electric vehicle 10. In still another example, the vehicle management system 100 may be distributed to the battery electric vehicle 10 and the management server.

In general, the vehicle management system 100 includes one or more processors 101 (hereinafter simply referred to as a "processor 101") and one or more storage devices 102 (hereinafter simply referred to as a "storage device 102"). The processor 101 executes various processes. The processor 101 is composed of a general-purpose processor, a special-purpose processor, a central processing unit (CPU), a graphics processing unit (GPU), an application specific integrated circuit (ASIC), a field programmable gate array (FPGA), an integrated circuit, a conventional circuit, etc. The processor 101 may also be called "circuitry" or "processing circuitry". The circuitry is hardware programmed to implement a described function or hardware that executes a function. The storage device 102 stores various types of information. Examples of the storage device 102 include a volatile memory, a non-volatile memory, a hard disk drive (HDD), and a solid state drive (SSD). The function of the vehicle management system 100 is implemented through cooperation of the processor 101 and the storage device 102.

For example, the vehicle management system 100 includes a function as a sound management system that manages a sound related to the battery electric vehicle 10. In particular, the vehicle management system 100 generates and manages a sound to be output from the speaker 70 mounted on the battery electric vehicle 10. Further, the vehicle management system 100 outputs the generated sound through the speaker 70 mounted on the battery electric vehicle 10.

In particular, the vehicle management system 100 generates a "pseudo engine sound" that simulates an engine sound of an engine vehicle as a function of the sound management system. Then, the vehicle management system 100 outputs the pseudo engine sound from the speaker 70 mounted on the battery electric vehicle 10. The engine vehicle is a vehicle on which an engine (internal combustion engine) is mounted and which uses the engine as a power unit for travel.

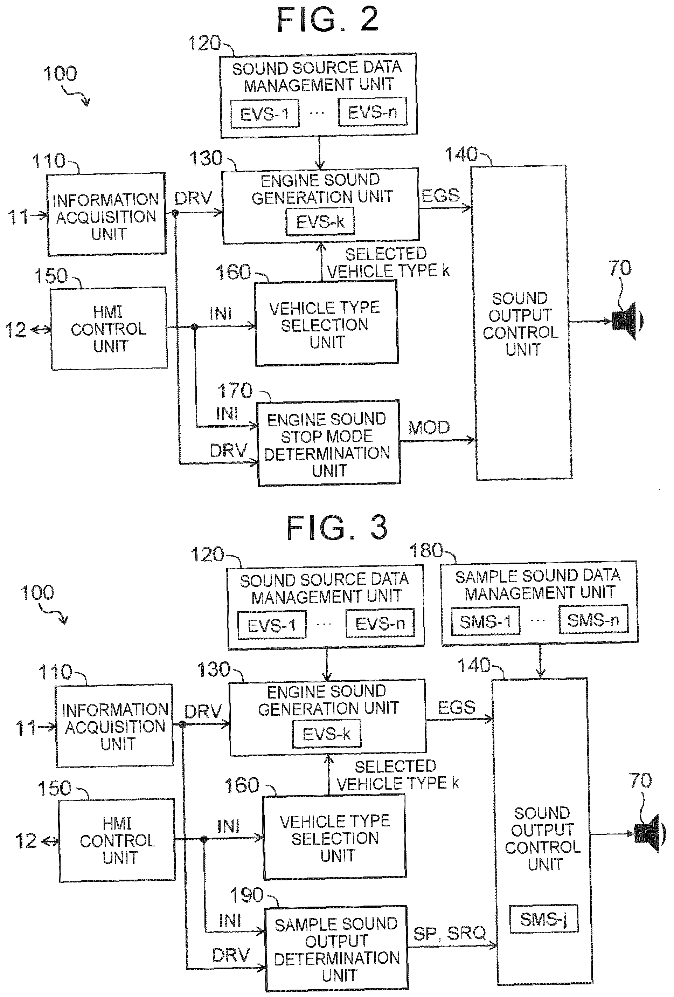

FIG. 2 is a block diagram illustrating an example of the basic functional configuration of the vehicle management system 100 as the sound management system. The vehicle management system 100 includes, as functional blocks, an information acquisition unit 110, a sound source data management unit 120, an engine sound generation unit 130, a sound output control unit 140, an HMI control unit 150, a vehicle type selection unit 160, and an engine sound stop mode determination unit 170. These functional blocks may be implemented through cooperation of the processor 101 that executes a vehicle management program 105 and the storage device 102, for example.

The information acquisition unit 110 acquires information about the battery electric vehicle 10. In particular, the information acquisition unit 110 acquires driving state information DRV that indicates the driving state of the battery electric vehicle 10. The driving state information DRV includes information about the operation state of a manual driving element (e.g. an accelerator pedal, a brake pedal, and a steering wheel) of the battery electric vehicle 10, information about the travel state of the battery electric vehicle 10, information about the situation around the battery electric vehicle 10, information about the driver of the battery electric vehicle 10, etc. Typically, the driving state information DRV includes information detected by the sensors 11 mounted on the battery electric vehicle 10. For example, the driving state information DRV may include the operation amount of an accelerator pedal (accelerator operation amount), the operation amount of a brake pedal (brake operation amount), a steering angle, a steering speed, steering torque, a wheel speed, a vehicle speed, a front-rear acceleration, a lateral acceleration, the rotational speed of the electric motor 44, etc. The driving state information DRV may include the position of the battery electric vehicle 10 . The driving state information DRV may include the surrounding environment of the battery electric vehicle 10 recognized (detected) by the surrounding environment recognition sensor. The driving state information DRV may include the driver recognition result recognized (detected) by the driver recognition sensor.

The driving state information DRV also includes a virtual engine rotational speed Ne. Here, it is assumed that the battery electric vehicle 10 uses a virtual engine as a power unit for travel. The virtual engine rotational speed Ne is the rotational speed of the virtual engine at the time when it is assumed that the battery electric vehicle 10 is driven by the virtual engine. For example, the information acquisition unit 110 may calculate the virtual engine rotational speed Ne so as to increase as the wheel speed increases. When the battery electric vehicle 10 includes a manual mode (manual transmission (MT) mode) to be discussed later, meanwhile, the information acquisition unit 110 may calculate the virtual engine rotational speed Ne in the manual mode based on the wheel speed, a total speed reduction ratio, and the slip rate of a virtual clutch. The method of calculating the virtual engine rotational speed Ne in the manual mode will be discussed in detail later.

The sound source data management unit 120 stores engine vehicle sound source data EVS that are used to generate a pseudo engine sound. In particular, the sound source data management unit 120 stores a plurality of types of engine vehicle sound source data EVS (EVS-1, ..., EVS-n) respectively corresponding to a plurality of engine vehicle types (1, ..., n). That is, the sound source data management unit 120 stores engine vehicle sound source data EVS for each engine vehicle type. The sound source data EVS-i ($1 < i \leq n$) are generated in advance through simulations etc. based on an engine model and a vehicle model of the corresponding engine vehicle type. The sound source data EVS are typically composed of a plurality of types of sound source data. Examples of the types of sound source data include sound source data (for low rotational speed, medium rotational speed, and high rotational speed) on sounds due to engine combustion, sound source data (for low rotational speed, medium rotational speed, and high rotational speed) on sounds due to the drive system such as gears, sound source data on noise sounds, and sound source data on event sounds (e.g. scraping sound and engine stall sound). The sound source data are flexibly adjustable. That is, at least one of the sound pressure and the frequency of sounds represented by the sound source data is flexibly adjustable. The sound source data management unit 120 is mainly implemented by the storage device 102.

The HMI control unit 150 controls the HMI 12 so as to provide various kinds of information to the user and accept various inputs from the user in each function associated with the sound management system. The specific content of control of the HMI 12 by the HMI control unit 150 will be described as appropriate in the description of each function.

The vehicle type selection unit 160 selects one of the engine vehicle types (1, ..., n). The vehicle type selection unit 160 transmits a selected engine vehicle type (selected vehicle type) k to the engine sound generation unit 130. As discussed later, the vehicle management system 100 generates a pseudo engine sound that replicates an engine sound of the selected vehicle type k. In particular, the user can make a designation input to designate the selected vehicle type k via the HMI 12. This is implemented by the HMI control unit 150 executing the following processes.

The HMI control unit 150 displays a list of a plurality of engine vehicle types on the HMI 12 in response to a request from the user. The HMI control unit 150 first accepts a tentative designation input for each engine vehicle type displayed on the list. For example, the HMI control unit 150 accepts an operation to select each engine vehicle type on the list as a tentative designation input for each engine vehicle type. The user can make a tentative designation input by selecting an engine vehicle type from among the engine vehicle types on the list. When the user makes a tentative designation input, the HMI control unit 150 displays information on an engine vehicle type corresponding to the tentative designation input on the HMI 12. Examples of the information to be displayed include the type of an engine mounted on the engine vehicle type, an exterior image of the engine vehicle type, and vehicle specifications (e.g., vehicle weight and size) of the engine vehicle type. Then, the HMI control unit 150 accepts a designation input for the engine vehicle type corresponding to the tentative designation input. For example, the HMI control unit 150 displays, on the HMI 12, a designation input operation member (e.g., a button switch) that is used to make a designation input to designate the engine vehicle type corresponding to the tentative designation input. The user can make a designation input to designate the engine vehicle type corresponding to the tentative designation input by operating the designation input operation member.

The vehicle type selection unit 160 acquires user input information INI from the HMI control unit 150. The vehicle type selection unit 160 determines the status of a designation input to designate the selected vehicle type k based on the input information INI. When a designation input to designate the selected vehicle type k is made by the user, the vehicle type selection unit 160 determines the designated engine vehicle type (hereinafter referred to as a "designated engine vehicle type") as the selected vehicle type k.

The engine sound generation unit 130 (engine sound simulator) is a simulator that generates a pseudo engine sound. The engine sound generation unit 130 acquires at least a part of the driving state information DRV from the information acquisition unit 110. In particular, the engine sound generation unit 130 acquires information on the virtual engine rotational speed Ne and the vehicle speed from the information acquisition unit 110. The engine sound generation unit 130 also acquires the selected vehicle type k from the vehicle type selection unit 160. The engine sound generation unit 130 also acquires sound source data EVS-k corresponding to the selected vehicle type k, among the types of engine vehicle sound source data EVS (EVS-1, ..., EVS-n), from the sound source data management unit 120. Then, the engine sound generation unit 130 generates a pseudo engine sound that matches the driving state (virtual engine rotational speed Ne and vehicle speed) of the battery electric vehicle 10 by combining one or more sound source data included in the sound source data EVS-k. Engine sound data EGS are data that represent the generated pseudo engine sound.

Generation of a pseudo engine sound is a well-known technique, and the method of generating a pseudo engine sound that is applicable to the present disclosure is not specifically limited. For example, a pseudo engine sound may be generated by a well-known engine sound simulator adopted in games etc. A map of the virtual engine rotational speed Ne and the frequency and a map of virtual engine torque and the sound pressure may be prepared, and the frequency of the pseudo engine sound may be increased and decreased in proportion to the virtual engine rotational speed Ne and the sound pressure of the pseudo engine sound may be increased and decreased in proportion to the virtual engine torque.

The vehicle management system 100 includes a mode (engine sound stop mode) in which the output of the pseudo engine sound from the speaker 70 is stopped. The engine sound stop mode determination unit 170 determines whether the engine sound stop mode is on or off based on at least one of the driving state information DRV acquired from the information acquisition unit 110 and the input information INI acquired from the HMI control unit 150. For example, the engine sound stop mode determination unit 170 determines the state of a manual mode (MT mode), to be discussed later, from the driving state information DRV. Then, the engine sound stop mode determination unit 170 turns off the engine sound stop mode while the manual mode is applied, and turns on the engine sound stop mode while the manual mode is canceled. In this case, the vehicle management system 100 outputs the pseudo engine sound from the speaker 70 only while the manual mode is applied. In addition, the HMI control unit 150 accepts an input to turn on and off the engine sound stop mode from the user via the HMI 12, for example. Then, the engine sound stop mode determination unit 170 switches to turn on and off the engine sound stop mode according to the input from the user. The engine sound stop mode determination unit 170 transmits a mode state signal MOD that indicates the on/off state of the engine sound stop mode to the sound output control unit 140.

The sound output control unit 140 receives the engine sound data EGS generated by the engine sound generation unit 130. Then, the sound output control unit 140 outputs a pseudo engine sound from the speaker 70 based on the engine sound data EGS. When outputting the engine sound data EGS, the sound output control unit 140 controls the sound pressure of the pseudo engine sound by controlling an amplifier. In addition, the sound output control unit 140 varies the frequency of the pseudo engine sound by controlling a frequency modulation circuit (FMC).

The sound output control unit 140 determines whether the engine sound stop mode is on or off from the mode state signal MOD. When the engine sound stop mode is on, the sound output control unit 140 stops the output of the pseudo engine sound from the speaker 70.

In this manner, the vehicle management system 100 is configured to output a pseudo engine sound from the speaker 70. Consequently, the user as the driver of the battery electric vehicle 10 is provided with an ambiance that makes him/her feel as if he/she were driving a real engine vehicle.

2. Features of Present Embodiment

2.1 Output of Sample Sound

The user can designate an engine vehicle type as the selected vehicle type k via the HMI 12. This allows the user as the driver to enjoy pseudo engine sounds that simulate engine sounds of various engine vehicle types according to his/her taste or mood. On the other hand, it is conceivable that the user determines whether a pseudo engine sound matches his/her taste or mood after actually listening to the pseudo engine sound during travel. Therefore, the user may be given an impression that it is troublesome to designate an engine vehicle type if it is unknown what pseudo engine sound is to be output before the battery electric vehicle 10 actually travels. This may be a factor that reduces the usability of the function.

Thus, the vehicle management system 100 according to the present embodiment further has a function to output, from the speaker 70, a sample sound for an engine vehicle type (hereinafter referred to as a "tentatively designated engine vehicle type") corresponding to a tentative designation input when a tentative designation input to tentatively designate the selected vehicle type k is made by the user while the battery electric vehicle 10 is stationary.

FIG. 3 is a block diagram illustrating an example of the functional configuration of the vehicle management system 100 associated with a function to output a sample sound. In the example illustrated in FIG. 3, the vehicle management system 100 includes a sample sound data management unit 180 and a sample sound output determination unit 190, in addition to the functional blocks illustrated in FIG 2. These functional blocks are implemented through cooperation of the processor 101 and the storage device 102, for example. In the example illustrated in FIG. 3, the functional block of the engine sound stop mode determination unit 170 is omitted. In the description of FIG. 3, it is assumed that the engine sound stop mode is off.

The sample sound data management unit 180 stores sample sound data SMS as data on sample sounds. In particular, the sample sound data management unit 180 stores sample sound data SMS (SMS-1, ..., SMS-n) respectively corresponding to the engine vehicle types (1, ..., n). That is, the sample sound data management unit 180 stores sample sound data SMS for each engine vehicle type. The sample sound data management unit 180 is mainly implemented by the storage device 102.

The sample sound reproduced based on the sample sound data SMS indicates characteristics of a pseudo engine sound generated for each engine vehicle type. For example, the sample sound can be an engine revving sound in a predetermined engine rotational speed range. In another example, the sample sound may be a pseudo engine sound generated during acceleration or deceleration in a predetermined vehicle speed range. In still another example, the sample sound may be a pseudo engine sound generated for a predetermined pattern of the operation state of an accelerator pedal (accelerator operation amount). The sample sound data SMS may be configured to enable reproduction of such a plurality of types of sample sounds.

The sample sound data SMS-i ($1 \leq i \leq n$) are generated in advance through simulations based on an engine model and a vehicle model of the corresponding engine vehicle type. Alternatively, the sample sound data SMS-i ($1 \leq i \leq n$) are generated in advance based on the sound source data EVS-i for the corresponding engine vehicle type. Alternatively, the sample sound data SMS-i ($1 \leq i \leq n$) are generated in advance by recording an actual engine sound for the corresponding engine vehicle type.

The sample sound output determination unit 190 determines whether to output a sample sound from the speaker 70. The sample sound output determination unit 190 determines whether the battery electric vehicle 10 is stationary based on the driving state information DRV acquired from the information acquisition unit 110. It can be determined whether the battery electric vehicle 10 is stationary based on the vehicle speed of the battery electric vehicle 10. In addition, the sample sound output determination unit 190 determines the status of a tentative designation input based on the input information INI acquired from the HMI control unit 150. Then, the sample sound output determination unit 190 determines to output a sample sound when a tentative designation input is made by the user while the battery electric vehicle is stationary.

When it is determined to output a sample sound, the sample sound output determination unit 190 sets output specifications SP of the sample sound. The output specifications SP include information on the engine vehicle type for which a sample sound is to be output and the output form. The engine vehicle type for which a sample sound is to be output is a tentatively designated engine vehicle type. The output form may include the duration of reproduction of the sample sound, the number of repetitions, etc. When the sample sound data SMS are configured to enable reproduction of a plurality of types of sample sounds, the output specifications SP may include information on the types of sample sounds. The sample sound output determination unit 190 transmits the output specifications SP to the sound output control unit 140.

After determining to output a sample sound, the sample sound output determination unit 190 further determines whether to stop outputting the sample sound. The sample sound output determination unit 190 determines the operation state of a manual driving element of the battery electric vehicle 10 based on the driving state information DRV acquired from the information acquisition unit 110. When an operation of the manual driving element of the battery electric vehicle 10 is detected, the sample sound output determination unit 190 determines to stop outputting the sample sound. For example, the sample sound output determination unit 190 determines to stop outputting the sample sound when the accelerator pedal is operated. The sample sound output determination unit 190 also determines the status of a designation input based on the input information INI acquired from the HMI control unit 150. When the user makes a designation input to designate a tentatively designated engine vehicle type, the sample sound output determination unit 190 determines to stop outputting the sample sound. When it is determined to stop outputting the sample sound, the sample sound output determination unit 190 transmits a stop request SRQ to the sound output control unit 140.

The sound output control unit 140 outputs a sample sound from the speaker 70 according to the output specifications SP when the output specifications SP are received from the sample sound output determination unit 190. Specifically, the sound output control unit 140 acquires sample sound data SMS-j corresponding to an engine vehicle type (tentatively designated engine vehicle type) designated by the output specifications SP from the sample sound data management unit 180.

Then, the sound output control unit 140 outputs the sample sound based on the sample sound data SMS-j from the speaker 70 in a predetermined output form designated by the output specifications SP. Meanwhile, the sound output control unit 140 stops outputting the sample sound when the stop request SRQ is received from the sample sound output determination unit 190 while the sample sound is being output.

The sound output control unit 140 may be configured to stop outputting a pseudo engine sound while the sample sound is being output. The sound output control unit 140 may be configured to resume outputting the pseudo engine sound after reproduction of the sample sound is finished or after the output of the sample sound is stopped.

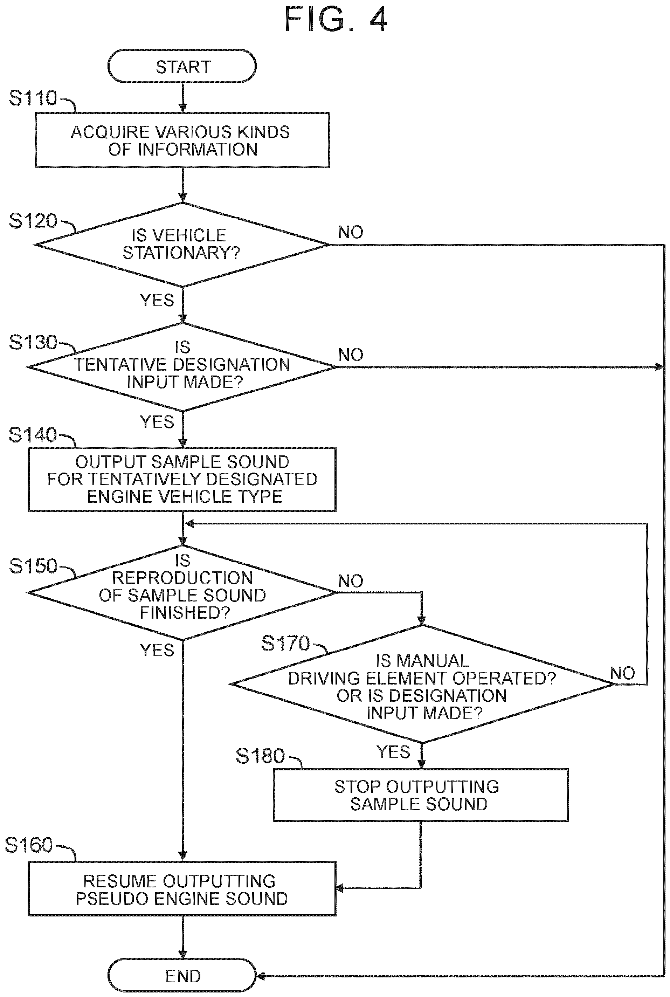

By providing the vehicle management system 100 with functional components in this manner, it is possible to implement the function to output a sample sound. FIG. 4 is a flowchart illustrating an example of a process flow of a process executed by the vehicle management system 100 related to the function to output a sample sound based on the functional components discussed above. The process flow illustrated in FIG. 4 may be executed repeatedly in predetermined processing cycles.

First, in step S110, the vehicle management system 100 acquires various kinds of information including the driving state information DRV and the input information INI.

Next, in step S120, the vehicle management system 100 determines whether the battery electric vehicle 10 is stationary based on the driving state information DRV. For example, it can be determined whether the battery electric vehicle 10 is stationary based on a detection value from the wheel speed sensor. When the battery electric vehicle is not stationary (step S120: No), the vehicle management system 100 ends the current process without outputting a sample sound. When the battery electric vehicle is stationary (step S120: Yes), the process proceeds to step S130.

In step S130, the vehicle management system 100 determines whether a tentative designation input to tentatively designate the selected vehicle type k is made by the user based on the input information INI. When a tentative designation input is not made (step S130: No), the vehicle management system 100 ends the current process without outputting a sample sound. When a tentative designation input is made (step S130: Yes), the process proceeds to step S140.

In step S140, the vehicle management system 100 stops outputting the pseudo engine sound, and outputs a sample sound for the tentatively designated engine vehicle type from the speaker 70. When reproduction of the sample sound in a predetermined output form is finished (step S150: Yes), the vehicle management system 100 resumes outputting the pseudo engine sound (step S160), and ends the current process. In this case, the pseudo engine sound to be output is the pseudo engine sound of the originally selected vehicle type k.

While the sample sound is being output from the speaker 70 (step S150: No), the vehicle management system 100 determines whether the manual driving element of the battery electric vehicle 10 is operated, or whether a designation input to designate the tentatively designated engine vehicle type is made (step S170). When the results of the determinations are both negative (step S170: No), the vehicle management system 100 continues outputting the sample sound.

When the manual driving element is operated (step S170: Yes), the vehicle management system 100 stops outputting the sample sound (step S180). Then, the vehicle management system 100 resumes outputting the pseudo engine sound (step S160), and ends the current process. In this case, the pseudo engine sound to be output is the pseudo engine sound of the originally selected vehicle type k.

When a designation input is made (step S170: Yes), similarly, the vehicle management system 100 stops outputting the sample sound (step S180). Then, the vehicle management system 100 resumes outputting the pseudo engine sound (step S160), and ends the current process. In this case, the tentatively designated engine vehicle type is determined as the designated engine vehicle type, and selected as the selected vehicle type k. Thus, the pseudo engine sound to be output is the pseudo engine sound of the newly selected vehicle type k.

In the vehicle management system 100 according to the present embodiment, as described above, a sample sound for an engine vehicle type (tentatively designated engine vehicle type) corresponding to a tentative designation input is output from the speaker 70 when a tentative designation input to tentatively designate the selected vehicle type k is made by the user while the battery electric vehicle 10 is stationary. This allows the user as the driver to listen to a sample sound for each engine vehicle type by making a tentative designation input prior to a designation input. By listening to the sample sound, the user can determine whether the pseudo engine sound matches his/her taste or mood, even without actually driving the battery electric vehicle 10. Then, the user can make a designation input to determine the tentatively designated engine vehicle type as the designated engine vehicle type when the pseudo engine sound matches his/her taste or mood. In this manner, it is possible to reduce the trouble given to the user when designating an engine vehicle type. In particular, safety can be secured as the user can determine and designate an engine vehicle type that matches his/her taste or mood while the battery electric vehicle 10 is stationary.

In the vehicle management system 100 according to the present embodiment, in addition, the output of the sample sound is stopped when the manual driving element of the battery electric vehicle 10 is operated while the sample sound is being output from the speaker 70. That is, the output of the sample sound is stopped when driving of the battery electric vehicle 10 is resumed. This makes it possible to suppress the output of the sample sound being continued and naturally resume the output of the pseudo engine sound when the driver resumes driving the battery electric vehicle 10.

2.2 Tone Adjustment of Pseudo Engine Sound with Use of Sample Sound

With the vehicle management system 100 according to the present embodiment, as discussed above, the user can check a pseudo engine sound for each engine vehicle type and designate an engine vehicle type by listening to a sample sound. Here, it is conceivable that the user feels that the tone of the sample sound is slightly different from his/her taste when he/she listens to the sample sound. The "tone" can also be called a "pitch" or a "key".

Thus, the vehicle management system 100 according to the present embodiment may be configured to further include a tone adjustment function that enables the user to adjust the tone of a pseudo engine sound using a sample sound.

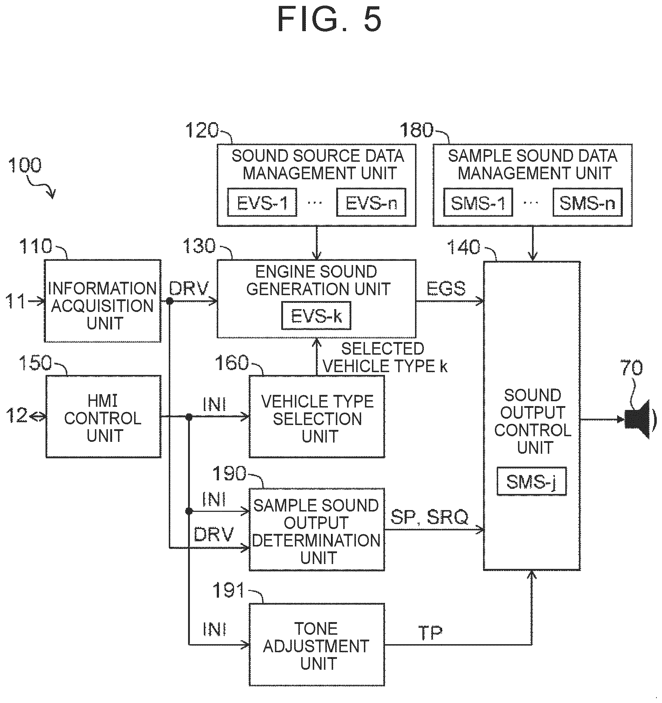

FIG. 5 is a block diagram illustrating an example of the functional configuration of the vehicle management system 100 associated with a function to adjust the tone of a pseudo engine sound using the sample sound. In the example illustrated in FIG. 5, the vehicle management system 100 includes a tone adjustment unit 191, in addition to the functional blocks illustrated in FIG. 3. This functional block is implemented through cooperation of the processor 101 and the storage device 102, for example.

The HMI control unit 150 accepts a change input to change the tone of a sample sound from the user while the sample sound is being output from the speaker 70. For example, the HMI control unit 150 displays, on the HMI 12, a change input member that is used to make a change input to change the tone of a sample sound for a tentatively designated engine vehicle type when a tentative designation input is accepted. The change input member may be constituted of a button that is used to make an input to raise or lower the pitch of a sound stepwise, for example. Alternatively, the change input member may be constituted of a slide switch that is used to make an input to continuously vary the pitch of a sound, for example. Alternatively, the change input member may be constituted of a select switch that is used to select one of a plurality of preset tones, for example. The user can make a change input to change the tone of a sample sound by operating such a change input member.

The tone adjustment unit 191 acquires the input information INI from the HMI control unit 150. The tone adjustment unit 191 determines the status of a change input to change the tone of a sample sound based on the input information INI. When a change input is made by the user, the tone adjustment unit 191 sets tone specifications TP. The tone specifications TP are set according to the content of the change input. For example, when the user makes a change input to raise the pitch of a sound by two steps, the tone specifications TP indicate that the pitch of a sound is raised by two steps from a default value. The tone adjustment unit 191 transmits the tone specifications TP to the sound output control unit 140.

The sound output control unit 140 adjusts the tone of a sample sound based on information on the tone specifications TP when the tone specifications TP are received from the tone adjustment unit 191 while the sample sound is being output from the speaker 70. In addition, the sound output control unit 140 outputs, from the speaker 70, the pseudo engine sound, the tone of which has been adjusted based on the information on the tone specifications TP, when the tentatively designated engine vehicle type related to the sample sound is the selected vehicle type k based on the designation input from the user. That is, in this case, the sound output control unit 140 outputs a pseudo engine sound that reflects the adjustment of the sample sound. The sound output control unit 140 may store the tone specifications TP for each engine vehicle type.

By providing the vehicle management system 100 with functional components in this manner, it is possible to implement the function to adjust the tone of a pseudo engine sound based on a sample sound. This allows the user as the driver to adjust the tone while listening to a sample sound. Then, by the driver making a designation input to designate a designated engine vehicle type after adjusting the tone so as to match his/her taste or mood, a pseudo engine sound that reflects the adjustment can be output. In this manner, it is possible to output a pseudo engine sound that approximates the taste or mood of the driver. Accordingly, it is possible to improve user satisfaction.

2.3 Output of Pseudo Engine Start Sound

The vehicle management system 100 includes an engine sound stop mode in which the output of a pseudo engine sound is stopped. The vehicle management system 100 resumes outputting the pseudo engine sound when the engine sound stop mode is switched from on to off. At this time, the user as the driver may feel a sense of discomfort if a pseudo engine sound of the selected vehicle type k based on the driving state of the battery electric vehicle 10 is abruptly output.

Thus, the vehicle management system 100 according to the present embodiment may be configured to further include a function to output a pseudo engine start sound of the selected vehicle type k when the engine sound stop mode is switched from on to off.

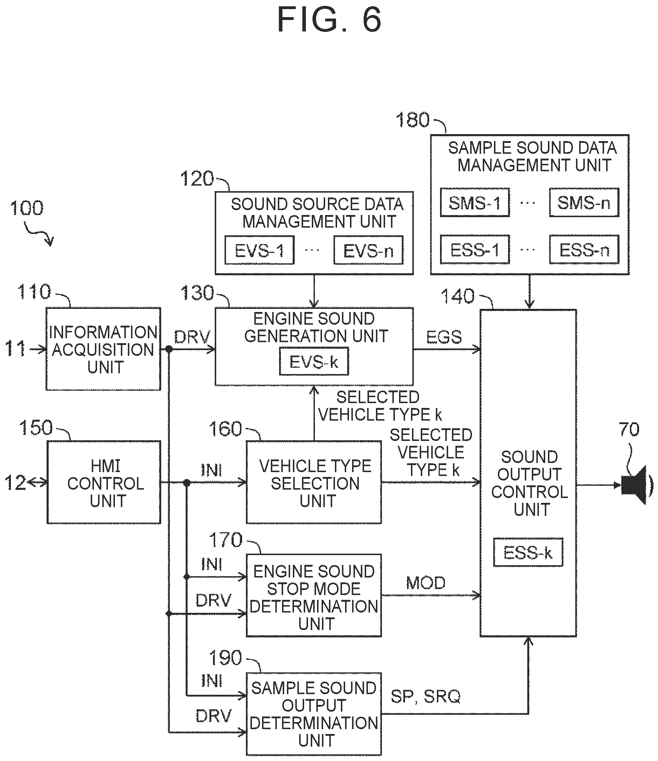

FIG. 6 is a block diagram illustrating an example of the functional configuration of the vehicle management system 100 associated with a function to output a pseudo engine start sound. In the example illustrated in FIG. 6, the engine sound stop mode determination unit 170 is illustrated.

The sample sound data management unit 180 further stores pseudo engine start sound data ESS (ESS-1, ..., ESS-n) respectively corresponding to the engine vehicle types (1, ..., n), in addition to the sample sound data SMS (SMS-1, ..., SMS-n). That is, the sample sound data management unit 180 stores pseudo engine start sound data ESS for each engine vehicle type in the example illustrated in FIG. 6, as compared with FIG. 3. The pseudo engine start sound data ESS-i ($1 \leq i \leq n$) are generated in advance through simulations based on an engine model and a vehicle model of the corresponding engine vehicle type. Alternatively, the pseudo engine start sound data ESS-i ($1 \leq i \leq n$) are generated in advance based on the sound source data EVS-i for the corresponding engine vehicle type. Alternatively, the pseudo engine start sound data ESS-i ($1 \leq i \leq n$) are generated in advance by recording an actual engine start sound for the corresponding engine vehicle type.

The sound output control unit 140 acquires the selected vehicle type k from the vehicle type selection unit 160. The sound output control unit 140 reads pseudo engine start sound data ESS-k according to the selected vehicle type k. Then, the sound output control unit 140 outputs a pseudo engine start sound from the speaker 70 based on the pseudo engine start sound data ESS-k when the engine sound stop mode is turned from on to off.

By providing the vehicle management system 100 with functional components in this manner, it is possible to implement the function to output a pseudo engine start sound. This makes it possible to reduce the sense of discomfort to be felt by the user when the engine sound stop mode is switched from on to off. Accordingly, it is possible to improve user satisfaction.

2.4 Selected Vehicle Type at Start of Battery Electric Vehicle

When there is a plurality of users of the battery electric vehicle 10, it is assumed that different users drive the battery electric vehicle 10 each time the battery electric vehicle 10 is driven. It is conceivable that each user has his/her favorite pseudo engine sound that may be different from that of the others. In such a case, the user as the driver may have an impression that it is troublesome to designate an engine vehicle type according to his/her taste over and over again each time he/she starts driving the battery electric vehicle 10.

Thus, in the vehicle management system 100 according to the present embodiment, the vehicle type selection unit 160 may be configured to determine a selected vehicle type k according to the user as the driver at the start of the battery electric vehicle 10.

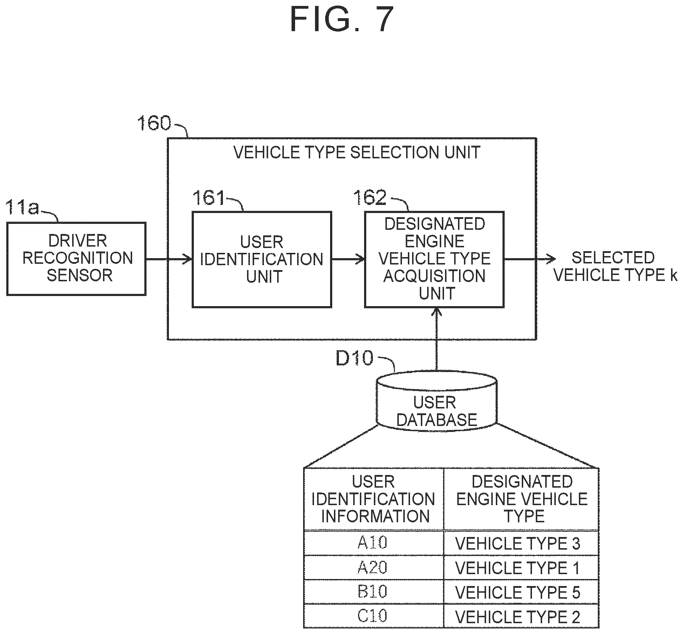

FIG. 7 illustrates an example of the functional configuration of the vehicle type selection unit 160 at the start of the battery electric vehicle 10. The vehicle type selection unit 160 includes a user identification unit 161 and a designated engine vehicle type acquisition unit 162.

The user identification unit 161 acquires user identification information on the driver using a driver recognition sensor 11a. Examples of the driver recognition sensor 11a include a driver monitor, a fingerprint authentication sensor, and an integrated circuit (IC) tag authentication sensor. The user identification information is information that enables identification of each user of the battery electric vehicle 10. Typically, the user identification information is a user identifier (ID). The user identification unit 161 acquires user identification information by identifying the user as the driver based on a feature amount of a driver image acquired by the driver monitor, for example. Alternatively, the user identification unit 161 acquires user identification information on the driver directly from authentication information from the fingerprint authentication sensor or the IC tag authentication sensor, for example. The user identification unit 161 transmits the acquired user identification information to the designated engine vehicle type acquisition unit 162.

The designated engine vehicle type acquisition unit 162 is connected to a user database D10. The user database D10 manages information about each user of the battery electric vehicle 10. In particular, the user database D10 manages the user identification information and the designated engine vehicle type in association with each other for each user (see FIG. 7). The designated engine vehicle type managed by the user database D10 is typically an engine vehicle type designated by the most recent designation input from the user.

The designated engine vehicle type acquisition unit 162 acquires user identification information on the user from the user identification unit 161. Then, the designated engine vehicle type acquisition unit 162 references the user database D10, and reads a designated engine vehicle type associated with the user identification information on the driver. For example, when the user identification information on the driver is "B10", the designated engine vehicle type acquisition unit 162 reads "vehicle type 5" from the user database D10.

The vehicle type selection unit 160 determines the selected vehicle type k at the start of the battery electric vehicle 10 as the designated engine vehicle type read by the designated engine vehicle type acquisition unit 162.

In this manner, it is possible to determine the selected vehicle type k according to the user as the driver at the start of the battery electric vehicle 10. This makes it possible to reduce the trouble given to the driver when starting to drive the battery electric vehicle 10.

3. Application to Battery Electric Vehicle with Manual Mode (MT Mode)

Electric motors that are used as power units for travel in general battery electric vehicles are significantly different in torque characteristics from internal combustion engines that are used as power units for travel in conventional vehicles (CVs). Due to the difference in the torque characteristics of the power units, the battery electric vehicles generally do not include a transmission, while the CVs inevitably include a transmission. As a matter of course, general battery electric vehicles do not include a manual transmission (MT) in which the gear ratio is switched by a manual operation by a driver. Therefore, there is a significant difference in driving feel between driving of the conventional vehicles with an MT (hereinafter referred to as "MT vehicles") and driving of the battery electric vehicles.

On the other hand, torque of electric motors can be controlled relatively easily by controlling an applied voltage or a magnetic field. Thus, it is possible to obtain desired torque characteristics within the operating range of the electric motors by appropriately controlling the electric motors. By making use of this feature, torque characteristics peculiar to the MT vehicles can be simulated by controlling torque of the battery electric vehicles. In addition, the battery electric vehicles can be provided with a pseudo shifter so that the driver can obtain a driving feel that is similar to that of the MT vehicles. These enable the battery electric vehicles to simulate the MT vehicles.

That is, in the battery electric vehicles, an output of the electric motor is controlled so as to simulate driving characteristics (torque characteristics) peculiar to the MT vehicles. The driver performs a pseudo manual shifting operation by operating the pseudo shifter. In response to the pseudo manual shifting operation by the driver, the battery electric vehicle changes driving characteristics (torque characteristics) by simulating an MT vehicle. This allows the driver of the battery electric vehicle to feel as if he/she were driving an MT vehicle. The control mode for an electric motor for simulating driving characteristics and manual shifting operations of an MT vehicle will be referred to as a "manual mode" or an "MT mode".

The battery electric vehicle 10 according to the present disclosure may include such a manual mode (MT mode). In the MT mode, the battery electric vehicle 10 generates a pseudo engine sound that matches driving operations by the driver, and outputs the pseudo engine sound via the speaker 70. Since not only driving operations of an MT vehicle but also an engine sound of an MT vehicle is reproduced, the satisfaction of the driver that seeks for reality is enhanced.

Examples of the configuration of the battery electric vehicle 10 with the manual mode (MT mode) will be described below.

3.1 First Configuration Example (Sequential Shifter)

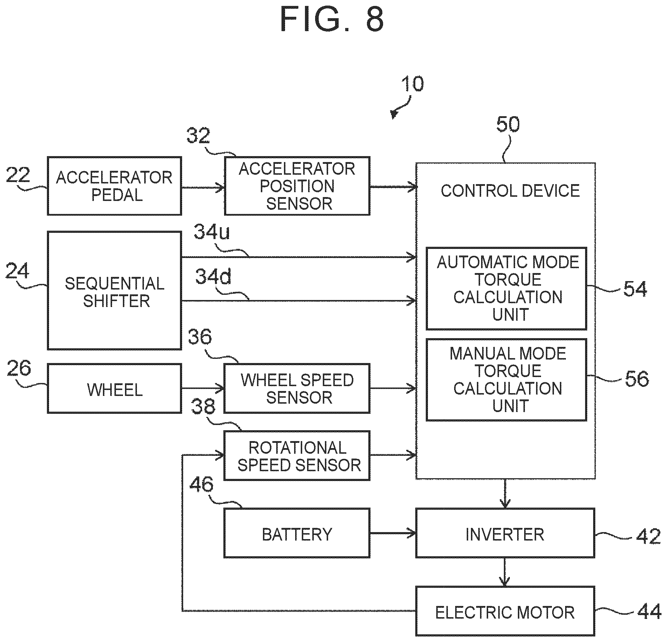

FIG. 8 is a block diagram illustrating a first example of the configuration of a power control system of the battery electric vehicle 10 according to the present embodiment. The battery electric vehicle 10 includes an electric motor 44, a battery 46, and an inverter 42. The electric motor 44 is a power unit for travel. The battery 46 stores electrical energy to drive the electric motor 44.

That is, the battery electric vehicle 10 is a battery electric vehicle (BEV) that travels on the electrical energy stored in the battery 46. During acceleration, the inverter 42 converts DC power input from the battery 46 into drive power for the electric motor 44. During deceleration, meanwhile, the inverter 42 converts regenerative power input from the electric motor 44 into DC power to be charged in the battery 46.

The battery electric vehicle 10 includes an accelerator pedal 22 that is used by the driver to input an acceleration request to the battery electric vehicle 10. The accelerator pedal 22 is provided with an accelerator position sensor 32 that detects an accelerator operation amount.

The battery electric vehicle 10 includes a sequential shifter 24. The sequential shifter 24 may be a paddle-type shifter, or may be a lever-type pseudo shifter.

The paddle-type shifter is a dummy that is different from a real paddle-type shifter. The paddle-type shifter is structured to resemble paddle-type shifters provided in MT vehicles with no clutch pedal. The paddle-type shifter is attached to the steering wheel. The paddle-type shifter includes an upshift switch and a downshift switch that are used to determine an operation position. An upshift signal 34u is generated when the upshift switch is pulled forward, and a downshift signal 34d is generated when the downshift switch is pulled forward.

Meanwhile, the lever-type pseudo shifter is a dummy that is different from a real shifter, as with the paddle-type shifter. The lever-type pseudo shifter is structured to resemble lever-type shifters provided in MT vehicles with no clutch pedal. The lever-type pseudo shifter is configured to output an upshift signal 34u when a shift lever is tilted forward, and to output a downshift signal 34d when the shift lever is tilted rearward.

A wheel 26 of the battery electric vehicle 10 is provided with a wheel speed sensor 36. The wheel speed sensor 36 is used as a vehicle speed sensor that detects the vehicle speed of the battery electric vehicle 10. In addition, the electric motor 44 is provided with a rotational speed sensor 38 that detects the rotational speed of the electric motor 44.

The battery electric vehicle 10 includes a control device 50. The control device 50 is typically an electronic control unit (ECU) mounted on the battery electric vehicle 10. The control device 50 may be a combination of a plurality of ECUs. The control device 50 includes an interface, a memory, and a processor. An in-vehicle network is connected to the interface. The memory includes a random access memory (RAM) that temporarily stores data and a read only memory (ROM) that stores programs that are executable by the processor and a variety of data associated with the programs. The programs are composed of a plurality of instructions. The processor reads the programs and the data from the memory, executes the programs, and generates a control signal based on signals acquired from sensors.

For example, the control device 50 controls the electric motor 44 through pulse width modulation (PWM) control of the inverter 42. Signals from the accelerator position sensor 32, the sequential shifter 24 (an upshift switch and a downshift switch when the sequential shifter 24 is a paddle-type shifter), the wheel speed sensor 36, and the rotational speed sensor 38 are input to the control device 50. The control device 50 processes these signals, and calculates a motor torque instruction value to be used for PWM control of the inverter 42.

The control device 50 includes an automatic mode (EV mode) and a manual mode (MT mode) as control modes. The automatic mode is a normal control mode for driving the battery electric vehicle 10 as a general battery electric vehicle. The automatic mode is programmed to continuously vary an output of the electric motor 44 according to an operation of the accelerator pedal 22. On the other hand, the manual mode is a control mode for driving the battery electric vehicle 10 like an MT vehicle. The manual mode is programmed to vary the output characteristics of the electric motor 44 for an operation of the accelerator pedal 22 according to an upshift operation and a downshift operation of the sequential shifter 24. That is, the manual mode is a control mode in which the output of the electric motor 44 can be varied in response to a driving operation of a vehicle constituent element other than the accelerator pedal 22 or the brake pedal. The automatic mode (EV mode) and the manual mode (MT mode) are switchable.

The control device 50 includes an automatic mode torque calculation unit 54 and a manual mode torque calculation unit 56. Each of the units 54, 56 may be an independent ECU, or may be a function of an ECU obtained by a processor executing a program stored in a memory.

The automatic mode torque calculation unit 54 includes a function to calculate motor torque at the time when the electric motor 44 is controlled in the automatic mode. The automatic mode torque calculation unit 54 stores a motor torque instruction map. The motor torque instruction map is a map that is used to determine motor torque from the accelerator operation amount and the rotational speed of the electric motor 44. A signal from the accelerator position sensor 32 and a signal from the rotational speed sensor 38 are input as parameters for the motor torque instruction map. The motor torque instruction map outputs motor torque corresponding to these signals. For this reason, even if the driver operates the sequential shifter 24 in the automatic mode, such an operation is not reflected in the motor torque.

The manual mode torque calculation unit 56 includes an MT vehicle model. The MT vehicle model is a model for calculating drive wheel torque that should be obtained through operations of the accelerator pedal 22 and the sequential shifter 24 on the assumption that the battery electric vehicle 10 is an MT vehicle.

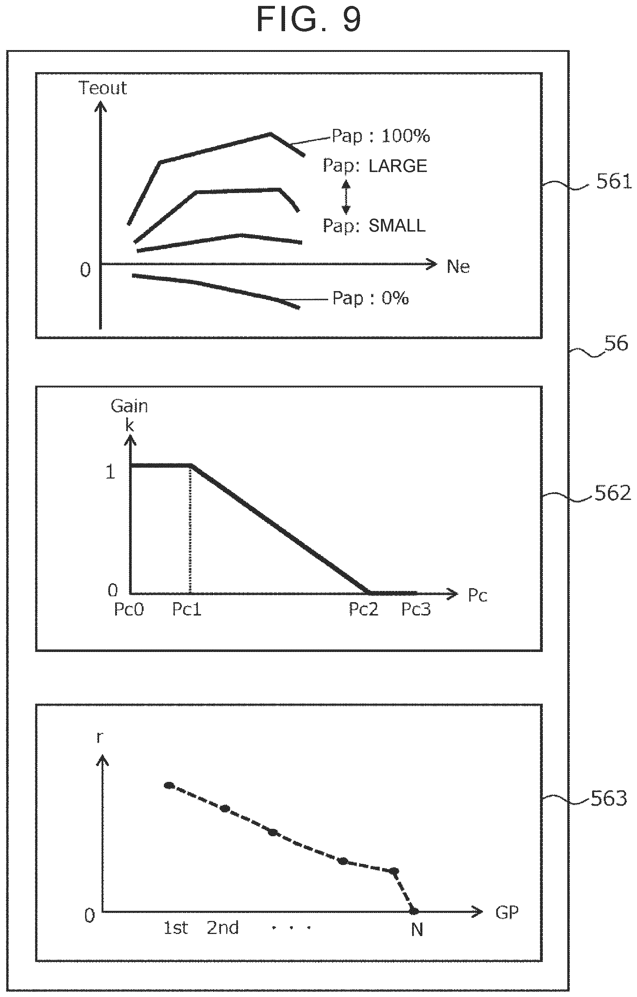

The MT vehicle model of the manual mode torque calculation unit 56 will be described with reference to FIG. 9. As illustrated in FIG. 9, the MT vehicle model includes an engine model 561, a clutch model 562, and a transmission model 563. An engine, a clutch, and a transmission virtually implemented by the MT vehicle model will be referred to as a "virtual engine", a "virtual clutch", and a "virtual transmission", respectively. The engine model 561 models the virtual engine. The clutch model 562 models the virtual clutch. The transmission model 563 models the virtual transmission.

The engine model 561 is used to calculate a virtual engine rotational speed Ne and virtual engine output torque Teout. The virtual engine rotational speed Ne is calculated based on a rotational speed Nw of the wheel, a total speed reduction ratio R, and a slip rate Rslip of the virtual clutch. For example, the virtual engine rotational speed Ne is represented by the following equation (1).

$$\text{Equation (1): } Ne = Nw \times R/(1 - Rslip)$$

The virtual engine output torque Teout is calculated from the virtual engine rotational speed Ne and an accelerator operation amount Pap. The virtual engine output torque Teout is calculated using a map that prescribes the relationship among the accelerator operation amount Pap, the virtual engine rotational speed Ne, and the virtual engine output torque Teout as indicated in FIG. 9. In this map, the virtual engine output torque Teout is given with respect to the virtual engine rotational speed Ne for each accelerator operation amount Pap. The torque characteristics indicated in FIG. 9 may be set to characteristics assumed for a gasoline engine, or may be set to characteristics assumed for a diesel engine. In addition, the torque characteristics may be set to characteristics assumed for a naturally aspirated engine, or may be set to characteristics assumed for a supercharged engine.

The clutch model 562 is used to calculate a torque transfer gain K. The torque transfer gain K is a gain for calculating the degree of transfer of torque of the virtual clutch according to a virtual clutch operation amount Pc. The virtual clutch operation amount Pc is normally 0%, and is temporarily increased to 100% in conjunction with switching of the virtual gear position of the virtual transmission. The clutch model 562 has a map as indicated in FIG. 9. In this map, the torque transfer gain K is given with respect to the virtual clutch operation amount Pc. In FIG. 9, Pc0 corresponds to a position at which the virtual clutch operation amount Pc is 0%, and Pc3 corresponds to a position at which the virtual clutch operation amount Pc is 100%. A range from Pc0 to Pc1 and a range from Pc2 to Pc3 are dead bands in which the torque transfer gain K is not varied according to the virtual clutch operation amount Pc. The clutch model 562 is used to calculate clutch output torque Teout using the torque transfer gain K. The clutch output torque Teout is torque output from the virtual clutch. For example, the clutch output torque Teout is given as the product of the virtual engine output torque Teout and the torque transfer gain K (Teout = Teout × K).

The clutch model 562 is also used to calculate the slip rate Rslip. The slip rate Rslip is used by the engine model 561 to calculate the virtual engine rotational speed Ne. The slip rate Rslip can be calculated using a map in which the slip rate Rslip is given with respect to the virtual clutch operation amount Pc, as with the torque transfer gain K.

The transmission model 563 is used to calculate a gear ratio r. The gear ratio r is a gear ratio determined by a virtual gear position GP in the virtual transmission. The virtual gear position GP is upshifted by one position when an upshift operation of the sequential shifter 24 is received. On the other hand, the virtual gear position GP is downshifted by one position when a downshift operation of the sequential shifter 24 is received. The transmission model 563 has a map as indicated in FIG. 9. In this map, the gear ratio r is given with respect to the virtual gear position GP such that the gear ratio r becomes lower as the virtual gear position GP becomes higher. The transmission model 563 is used to calculate transmission output torque Tgout using the gear ratio r obtained from the map and the clutch output torque Tcout. For example, the transmission output torque Tgout is given as the product of the clutch output torque Tcout and the gear ratio r (Tgout = Tcout × r). The transmission output torque Tgout is non-continuously varied according to switching of the gear ratio r. These non-continuous variations in the transmission output torque Tgout cause shift shocks, allowing the vehicle to act like a vehicle with a stepped transmission.

The MT vehicle model is used to calculate drive wheel torque Tw using a predetermined speed reduction ratio rr. The speed reduction ratio rr is a fixed value determined by the mechanical structure from the virtual transmission to drive wheels. A value obtained by multiplying the speed reduction ratio rr by the gear ratio r is the total speed reduction ratio R discussed earlier. The MT vehicle model is used to calculate the drive wheel torque Tw from the transmission output torque Tgout and the speed reduction ratio rr. For example, the drive wheel torque Tw is given as the product of the transmission output torque Tgout and the speed reduction ratio rr (Tw = Tgout × rr).

The control device 50 converts the drive wheel torque Tw calculated using the MT vehicle model into required motor torque Tm. The required motor torque Tm is motor torque required to achieve the drive wheel torque Tw calculated using the MT vehicle model. The drive wheel torque Tw is converted into the required motor torque Tm using the speed reduction ratio from an output shaft of the electric motor 44 to the drive wheels. Then, the control device 50 controls the electric motor 44 by controlling the inverter 42 according to the required motor torque Tm.

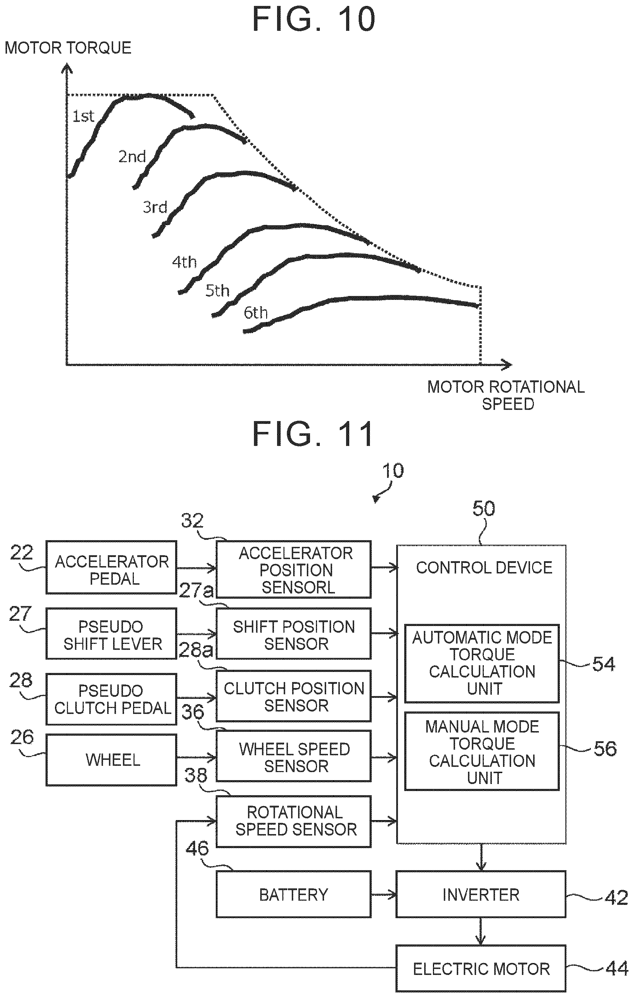

FIG. 10 illustrates the torque characteristics of the electric motor 44 achieved through motor control performed using the MT vehicle model, as compared with the torque characteristics (dotted line in the drawing) of the electric motor 44 achieved through normal motor control for a battery electric vehicle (BEV). With the motor control performed using the MT vehicle model, as indicated in FIG. 10, it is possible to achieve torque characteristics (solid lines in the drawing) that simulate the torque characteristics of an MT vehicle according to virtual gear positions set by the sequential shifter 24. In FIG. 10, the number of gear positions is six.

3.2 Second Configuration Example

FIG. 11 is a block diagram illustrating a second example of the configuration of the power control system of the battery electric vehicle 10 according to the present embodiment. Here, only components that are different from those according to the first configuration example discussed above will be described. Specifically, in the second configuration example, the battery electric vehicle 10 includes a pseudo shift lever (pseudo shift device) 27 and a pseudo clutch pedal 28, in place of the sequential shifter 24 provided in the first configuration example. The pseudo shift lever 27 and the pseudo clutch pedal 28 are dummies that are different from a real shift lever and clutch pedal.

The pseudo shift lever 27 is structured to simulate a shift lever provided in an MT vehicle. The arrangement and the operating feel of the pseudo shift lever 27 are equivalent to those in an actual MT vehicle. The pseudo shift lever 27 is provided with positions corresponding to gear positions of first speed, second speed, third speed, fourth speed, fifth speed, sixth speed, reverse, and neutral, for example. The pseudo shift lever 27 is provided with a shift position sensor 27a that detects a gear position by determining which position the pseudo shift lever 27 is in.

The pseudo clutch pedal 28 is structured to simulate a clutch pedal provided in an MT vehicle. The arrangement and the operating feel of the pseudo clutch pedal 28 are equivalent to those in an actual MT vehicle. The pseudo clutch pedal 28 is operated when operating the pseudo shift lever 27. That is, the driver depresses the pseudo clutch pedal 28 when it is desired to change the setting of the gear position using the pseudo shift lever 27, and stops depressing the pseudo clutch pedal 28 and returns the pseudo clutch pedal 28 to the original position when the change in the setting of the gear position is finished. The pseudo clutch pedal 28 is provided with a clutch position sensor 28a that detects the amount of depression of the pseudo clutch pedal 28.

Signals from the accelerator position sensor 32, the shift position sensor 27a, the clutch position sensor 28a, the wheel speed sensor 36, and the rotational speed sensor 38 are input to the control device 50. The control device 50 processes these signals, and calculates a motor torque instruction value to be used for PWM control of the inverter 42.

The control device 50 includes an automatic mode and a manual mode as control modes, as in the first configuration example discussed above. The automatic mode is programmed to continuously vary an output of the electric motor 44 according to an operation of the accelerator pedal 22. On the other hand, the manual mode is a control mode for driving the battery electric vehicle 10 like an MT vehicle. The manual mode is programmed to vary the output and the output characteristics of the electric motor 44 for an operation of the accelerator pedal 22 according to operations of the pseudo clutch pedal 28 and the pseudo shift lever (pseudo shift device) 27. That is, the manual mode is a control mode in which the output of the electric motor 44 can be varied in response to driving operations of vehicle constituent elements other than the accelerator pedal 22 or the brake pedal.

The vehicle model of the manual mode torque calculation unit 56 is the same as that illustrated in FIG. 9. However, the virtual clutch operation amount Pc is replaced with the amount of depression of the pseudo clutch pedal 28 detected by the clutch position sensor 28a. In addition, the virtual gear position GP is determined according to the position of the pseudo shift lever 27 detected by the shift position sensor 27a.

**Claims**

1. A vehicle management system (100) to be applied to a battery electric vehicle (10) that includes an electric motor (44) as a drive source, the vehicle management system (100) comprising one or more processors (101) configured to:

   generate a pseudo engine sound based on a driving state of the battery electric vehicle (10); output the pseudo engine sound from a speaker (70) mounted on the battery electric vehicle (10); generate the pseudo engine sound using a sound source corresponding to a selected vehicle type selected from among a plurality of engine vehicle types; and when a user makes a tentative designation input to tentatively designate the selected vehicle type while the battery electric vehicle (10) is stationary, output a sample sound for an engine vehicle type corresponding to the tentative designation input in a predetermined output form from the speaker (70).

2. The vehicle management system (100) according to claim 1, wherein the sample sound is an engine revving sound in a predetermined engine rotational speed range.

3. The vehicle management system (100) according to claim 1 or 2, wherein:

the driving state of the battery electric vehicle (10) includes an operation state of a manual driving element of the battery electric vehicle (10); and
the one or more processors (101) are configured to stop outputting the sample sound when the manual driving element is operated while the sample sound is being output from the speaker (70).

4. The vehicle management system (100) according to claim 3, wherein the manual driving element includes an accelerator pedal.

5. The vehicle management system (100) according to any one of claims 1 to 4, wherein the one or more processors (101) are configured to:

accept a change input to change a tone of the sample sound from the user while the sample sound is being output from the speaker (70);
adjust the tone of the sample sound according to the change input when the change input is made; and
output the pseudo engine sound so as to reflect an adjustment of the sample sound when the engine vehicle type corresponding to the tentative designation input is determined as the selected vehicle type.

6. The vehicle management system (100) according to any one of claims 1 to 5, wherein the one or more processors (101) are configured to:

switch a state of an engine sound stop mode in which an output of the pseudo engine sound from the speaker (70) is stopped; and
output a pseudo engine start sound of the selected vehicle type from the speaker (70) when the engine sound stop mode is turned from on to off.

7. The vehicle management system (100) according to any one of claims 1 to 6, wherein:

the user includes a plurality of users;
the battery electric vehicle (10) includes one or more storage devices (102) configured to store a database that manages user identification information and a designated engine vehicle type in association with each other for each of the users, and a driver recognition sensor (11a) configured to recognize a driver of the battery electric vehicle (10);
the designated engine vehicle type is a vehicle type designated by a designation input to designate the selected vehicle type; and
the one or more processors (101) are configured to

acquire the user identification information on the driver using the driver recognition sensor (11a) when the battery electric vehicle (10) is started,
read the designated engine vehicle type associated with the user identification information on the driver from the database, and
determine the read designated engine vehicle type as the selected vehicle type.

8. The vehicle management system (100) according to any one of claims 1 to 7, wherein the battery electric vehicle (10) includes a manual mode in which driving characteristics of a manual transmission vehicle are simulated.

9. The vehicle management system (100) according to claim 8, wherein:

the battery electric vehicle (10) includes an accelerator pedal and a sequential shifter; and
the battery electric vehicle (10) is configured to vary output characteristics of the electric motor (44) for an operation of the accelerator pedal according to a shift operation of the sequential shifter in the manual mode.

10. The vehicle management system (100) according to claim 8, wherein:

the battery electric vehicle (10) includes an accelerator pedal, a pseudo clutch pedal, and a pseudo shift device;
the pseudo clutch pedal is operated when operating the pseudo shift device; and
the battery electric vehicle (10) is configured to vary an output of the electric motor (44) for an operation of the accelerator pedal according to an operation of the pseudo clutch pedal and an operation of the pseudo shift device in the manual mode.

11. A battery electric vehicle (10) comprising:
an electric motor (44) to be used as a drive source; and a vehicle management system (100) according to any one of claims 1 to 10.

# FIG. 1

100 ~

VEHICLE MANAGEMENT SYSTEM

101 ~

PROCESSOR

102 ~

STORAGE DEVICE

105 ~

VEHICLE MANAGEMENT PROGRAM

10

12

11

HMI

SENSORS

70

44

ELECTRIC MOTOR

# FIG. 2

120 — SOUND SOURCE DATA MANAGEMENT UNIT

| EVS-1 | ... | EVS-n |

100

110 — INFORMATION ACQUISITION UNIT

11 →

130 — ENGINE SOUND GENERATION UNIT

EVS-k

DRV

EGS

140 — SOUND OUTPUT CONTROL UNIT

70

SELECTED VEHICLE TYPE k

150 — HMI CONTROL UNIT

12 ↔

INI

160 — VEHICLE TYPE SELECTION UNIT

170 — ENGINE SOUND STOP MODE DETERMINATION UNIT

INI

DRV

MOD

# FIG. 3

120 — SOUND SOURCE DATA MANAGEMENT UNIT

| EVS-1 | ... | EVS-n |

180 — SAMPLE SOUND DATA MANAGEMENT UNIT

| SMS-1 | ... | SMS-n |

100

110 — INFORMATION ACQUISITION UNIT

11 →

DRV

130 — ENGINE SOUND GENERATION UNIT

EVS-k

EGS

140 — SOUND OUTPUT CONTROL UNIT

SMS-j

70

SELECTED VEHICLE TYPE k

150 — HMI CONTROL UNIT

12 ↔

INI

160 — VEHICLE TYPE SELECTION UNIT

190 — SAMPLE SOUND OUTPUT DETERMINATION UNIT

INI

DRV

SP, SRQ

# FIG. 4

START

S110 — ACQUIRE VARIOUS KINDS OF INFORMATION

S120 — IS VEHICLE STATIONARY? — NO

YES

S130 — IS TENTATIVE DESIGNATION INPUT MADE? — NO

YES

S140 — OUTPUT SAMPLE SOUND FOR TENTATIVELY DESIGNATED ENGINE VEHICLE TYPE

S150 — IS REPRODUCTION OF SAMPLE SOUND FINISHED? — NO

YES

S170 — IS MANUAL DRIVING ELEMENT OPERATED? OR IS DESIGNATION INPUT MADE? — NO

YES

S180 — STOP OUTPUTTING SAMPLE SOUND

S160 — RESUME OUTPUTTING PSEUDO ENGINE SOUND

END

# FIG. 5

# FIG. 6

# FIG. 7

160 — VEHICLE TYPE SELECTION UNIT

11a — DRIVER RECOGNITION SENSOR

161 — USER IDENTIFICATION UNIT

162 — DESIGNATED ENGINE VEHICLE TYPE ACQUISITION UNIT

→ SELECTED VEHICLE TYPE k

D10 — USER DATABASE

| USER IDENTIFICATION INFORMATION | DESIGNATED ENGINE VEHICLE TYPE |
|---|---|
| A10 | VEHICLE TYPE 3 |
| A20 | VEHICLE TYPE 1 |
| B10 | VEHICLE TYPE 5 |
| C10 | VEHICLE TYPE 2 |

# FIG. 8

# FIG. 9

# FIG. 10

MOTOR TORQUE

1st
2nd
3rd
4th
5th
6th

MOTOR ROTATIONAL SPEED

# FIG. 11

10

| 22 ACCELERATOR PEDAL | 32 ACCELERATOR POSITION SENSORL | 50 CONTROL DEVICE |
| 27 PSEUDO SHIFT LEVER | 27a SHIFT POSITION SENSOR | 54 AUTOMATIC MODE TORQUE CALCULATION UNIT |
| 28 PSEUDO CLUTCH PEDAL | 28a CLUTCH POSITION SENSOR | 56 MANUAL MODE TORQUE CALCULATION UNIT |
| 26 WHEEL | 36 WHEEL SPEED SENSOR | |
| | 38 ROTATIONAL SPEED SENSOR | |
| 46 BATTERY | INVERTER 42 | |
| | ELECTRIC MOTOR 44 | |

Europäisches
Patentamt

European
Patent Office

Office européen
des brevets

# EUROPEAN SEARCH REPORT

**Application Number**

EP 24 20 7423

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/010269 A1 (BALLARD CLAUDIO R [US]) 13 January 2011 (2011-01-13) | 1,3,5,6, 8-11 | INV. G10K15/02 |
| Y | * abstract * | 7 | |
| A | * figures 1-8 * | 4 | |
| | * pages 1-7 * | | |
| | ----- | | |
| X | US 2014/328494 A1 (POMMERER MICHAEL [DE] ET AL) 6 November 2014 (2014-11-06) | 1-3,5,6, 8-11 | |
| Y | * abstract * | 7 | |
| A | * figures 1,2 * | 4 | |
| | * pages 1-5 * | | |
| | ----- | | |
| X | US 2015/364125 A1 (PARK DONG CHUL [KR] ET AL) 17 December 2015 (2015-12-17) | 1,3,5,6, 8-11 | |
| Y | * abstract * | 7 | |
| A | * figures 1,4,5a-5c * | 4 | |
| | * pages 1-7 * | | |
| | ----- | | |
| X | DE 10 2016 006946 A1 (AUDI AG [DE]) 14 December 2017 (2017-12-14) | 1,3,6, 8-11 | |
| Y | * abstract * | 7 | **TECHNICAL FIELDS SEARCHED (IPC)** |
| A | * figure 1 * | 4 | |
| | * pages 1-5 * | | G10K |
| | ----- | | B60Q |
| Y | US 11 691 632 B1 (CHEN JEFFREY [US] ET AL) 4 July 2023 (2023-07-04) | 7 | B60L |
| | * abstract * | | |
| | * figures 1,4,6 * | | |
| | * columns 1,13-19 * | | |
| | ----- | | |

The present search report has been drawn up for all claims

| Place of search | Date of completion of the search | Examiner |
|---|---|---|
| The Hague | 21 March 2025 | Meyer, Matthias |

EPO FORM 1503 03.82 (P04C01)

## ANNEX TO THE EUROPEAN SEARCH REPORT
## ON EUROPEAN PATENT APPLICATION NO.

EP 24 20 7423

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2025

| Patent document cited in search report | Publication date | Patent family member(s) | Publication date |
|---|---|---|---|
| US 2011010269 A1 | 13-01-2011 | CN 102481927 A | 30-05-2012 |
| | | EP 2451685 A2 | 16-05-2012 |
| | | US 2011010269 A1 | 13-01-2011 |
| | | WO 2011005872 A2 | 13-01-2011 |
| US 2014328494 A1 | 06-11-2014 | CN 104129277 A | 05-11-2014 |
| | | DE 102013208098 A1 | 06-11-2014 |
| | | EP 2800092 A2 | 05-11-2014 |
| | | JP 5798665 B2 | 21-10-2015 |
| | | JP 2014218242 A | 20-11-2014 |
| | | US 2014328494 A1 | 06-11-2014 |
| US 2015364125 A1 | 17-12-2015 | CN 105313901 A | 10-02-2016 |
| | | KR 20150142298 A | 22-12-2015 |
| | | US 2015364125 A1 | 17-12-2015 |
| DE 102016006946 A1 | 14-12-2017 | NONE | |
| US 11691632 B1 | 04-07-2023 | US 11691632 B1 | 04-07-2023 |
| | | WO 2024120948 A1 | 13-06-2024 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011215437 A